# EUROPÄISCHE PATENTSCHRIFT

(11) **EP 0 489 231 B1**
(45) Veröffentlichungstag und Bekanntmachung des Hinweises auf die Patenterteilung: **11.08.1993**
(21) Anmeldenummer: 91114710.6
(22) Anmeldetag: 31.08.1991
(51) Int. Cl.: C02F 3/20, B01F 3/04

(54) **Belüftungsvorrichtung für eine Flüssigkeit**
Aerator for liquids
Aérateur pour liquides

(30) Priorität: 06.12.1990 DE 4038940
(43) Veröffentlichungstag der Anmeldung: 10.06.1992
(73) Patentinhaber: Schreiber, Berthold, Dipl.-Ing, D-30419 Hannover (DE); Schreiber, Erhard, Dipl.-Ing., D-30853 Langenhagen (DE)
(72) Erfinder: Schmidt, Hans, W-3384 Liebenburg (DE)
(74) Vertreter: Arendt, Helmut, Dipl.-Ing.

(56) Entgegenhaltungen:
- DE-A- 3 319 161
- DE-A- 3 418 548
- DE-A- 3 624 580
- DE-A- 3 639 473

## Beschreibung

Die Erfindung betrifft eine Belüftungsvorrichtung zur Injektion von Druckluft in eine Flüssigkeit, insbesondere Abwasser, mit einem rohrförmigen Grundkörper und einer diesen umgebenden elastischen, perforierten Membran, durch deren Perforation bei der Beaufschlagung über ein oder mehrere radiale Öffnungen im Grundkörper die Druckluft feinperlig in die Flüssigkeit gebracht wird und im nichtbeaufschlagten Zustand den Grundkörper eng umschließt sowie mit einem stirnseitigen Verbindungselement, welches den Grundkörper mit einem Druckluftzuführungsrohr verbindet und trägt.

Belüftungsvorrichtungen der vorgenannten Art sind beispielsweise durch die DE-A 33 19 161 oder DE-A 38 19 305 bekannt, bei welchen vorkammerartige Gas- bzw. Drucklufträume und von diesen getrennte sogenannte Fluträume vorgesehen sind, die durch die umgebende Flüssigkeit flutbar sind. Die Gas- bzw. Drucklufträume sind von den Fluträumen durch unterschiedliche Mittel, beispielsweise eingefügte Zwischenwände oder solche Wände getrennt, die mit den Grundkörpern aus einem Teil bestehen. Es hat sich gezeigt, daß die bekannten Ausführungen für den Einsatz bei Abwasserreinigungsanlagen mechanisch nicht robust genug sind sondern häufig Schäden im Trennwandbereich zeigen. Sie sind für den praktischen Dauereinsatz nicht geeignet. Durch die Unterteilung des Grundkörpers in mehrere Kammern ist der Herstellungsaufwand für die bekannten Belüftungsvorrichtungen recht hoch. Durch Trennwände entstehende sackförmige Fluträume bilden Totzonen, in denen kein Flüsigkeitsaustausch stattfindet. Zur Behebung dieser Nachteile wurde in EP-A-0482332 eine Belüftungsvorrichtung der eingangs genannten Art vorgeschlagen, deren tragende Verbindung zwischen dem Grundkörper und dem Druckluftzuführungsrohr wesentlich stabiler und die Gesamtausführung einfacher und dadurch kostengünstiger herstellbar ist als eine der bekannten Konstruktionen. Als Verbindungselement zwischen dem Grundkörper und dem Druckluftzuführungsrohr dient hierbei ein Tragkörper mit wenigstens einer axial gerichteten Luftzuführungsnut, der mit einem Ende in das Druckluftzuführungsrohr reicht und mit seinem freien Ende tragend gegen die Flüssigkeit dichtend in den Grundkörper greift. Diese Ausführung ist jedoch nicht in der Lage, einen rohrförmigen Hohlkörper mit einem Druckluftzuführungsrohr zu verbinden, das übliche Rohranschlußnippel aufweist.

Der Erfindung liegt die Aufgabe zu Grunde, eine Belüftungsvorrichtung der eingangs genannten Art zu schaffen, deren tragende Verbindung zwischen dem Grundkörper und dem Druckluftzuführungsrohr ebenfalls sehr stabil ist, einfach und dadurch kostengünstig herstellbar und ohne weitere Hilfsmittel in der Lage ist, einen Grundkörper der Belüftungsvorrichtung ohne weitere Hilfsmittel mit handelsüblichen Rohrnippeln zu verbinden. Außerdem soll dabei vermieden werden, daß sich stillstehende Totzonen ohne Flüssigkeitsaustausch bilden. Zur Lösung dieser Aufgabe ist das Verbindungselement als zylindrischer Körper ausgebildet und mit einer zentralen, ein Innengewinde aufweisenden Luftzuführungsöffnung versehen, die durch wenigstens eine radiale Öffnung mit dem Raum zwischen dem Außenmantel des rohrförmigen Grundkörpers und der umgebenden Membran verbunden ist, und daß das Verbindungselement wenigstens eine axial gerichtete Durchgangsöffnung zur Schaffung einer zweiseitigen Verbindung des Grundkörperinnenraums mit der umgebenden Flüssigkeit aufweist.

Die erfindungsgemäße Ausführung reduziert das Verbindungselement auf ein kostengünstig herstellbares, zylindrisches Kopfstück, das in einfacher Weise mit einem handelsüblichen Rohrabschnitt ohne weitere Hilfsmittel verbunden werden kann. Ein weiterer, wesentlicher Vorteil der Erfindung ist das auftriebslose Verhalten der Belüftungseinrichtung durch das Fehlen von gas- bzw. luftgefüllten Vorkammern oder Abteilen. Die Erfindung bietet ferner die Möglichkeit, das Verbindungselement und den Grundkörper einstückig auszubilden. Ferner kann das Verbindungselement mit einer Stirnseite des Grundkörpers verschweißt werden, beispielsweise durch eine Spiegelschweißung. Das Verbindungselement ist in einfacher Weise durch Spritzgießen herstellbar. Bei einer einstückigen Ausbildung kann der gesamte Grundkörper zusammen mit dem vorderen, als Verbindungselement dienenden Teil als Spritzgießteil gefertigt werden.
Weitere, den Erfindungsgegenstand vorteilhaft gestaltende Merkmale sind in den Unteransprüchen angegeben.

Verfahrenstechnisch bei der Abwasserreinigung sehr vorteilhaft ist die von der Flüssigkeit durchströmbare Verbindung zwischen dem Grundkörperinnenraum, das ist der Flutraum, und der umgebenden Flüssigkeit, so daß ein selbständiger Flüssigkeitsaustausch ermöglicht und unerwünschte mikrobiologische Reaktionen vermieden werden, wie sie in Flüssigkeitstotzonen bekannter Belüftungseinrichtungen entstehen können.

In der Zeichnung sind Ausführungsbeispiele der Erfindung schematisch dargestellt und nachstehend erläutert.

Es zeigen:
- Fig. 1: den Längsschnitt durch einen an einem Luftzuführungsrohr befestigten Grundkörper in einstückiger Ausführung,
- Fig. 2: den Querschnitt A-A durch das Verbindungselement,
- Fig. 3: den Querschnitt B-B durch das Verbindungselement,
- Fig. 4: die Stirnansicht X des Grundkörpers,
- Fig. 5: den Längsschnitt durch einen Grundkörper mit angeschweißtem Verbindungselement und
- Fig. 6: den Längsschnitt durch einen Grundkörper mit angeschraubtem Verbindungselement.

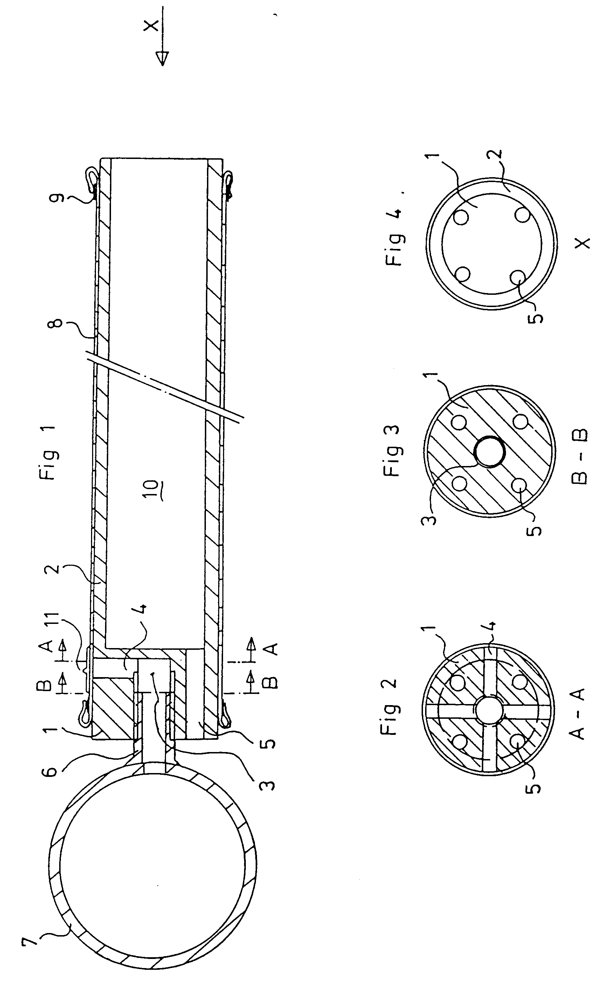

Die Fig. 1 zeigt eine montierte Belüftungsvorrichtung, bestehend aus einem rohrförmigen Grundkörper 2, der mit dem Verbindungselement 1 einstückig ausgebildet ist. Der Grundkörper ist auf einen handelsüblichen Rohrnippel 6 des Druckluftzuführungsrohres 7 geschraubt. Das Druckluftzuführungsrohr 7 dient, wie bei ähnlichen Ausführungen, gleichzeitig als Tragelement. Der Grundkörper 2 ist mit seinem als Kopfstück ausgebildeten Verbindungselement durch Spritzgießen herstellbar. Zum Aufschrauben des Verbindungselements 1 auf den handelsüblichen Rohrnippel 6 ist in der zentralen Öffnung 3 ein entsprechendes Innengewinde angebracht. Zum Durchtritt der Luft vom Rohrnippel 6 unter die elastisch perforierte Membran 8, die bis auf das als Kopfstück zu bezeichnende Verbindungselement 1 reicht, ist wenigstens eine radiale Öffnung 4 vorgesehen, die am inneren Ende der zentralen, des Innengewinde aufweisenden Luftzuführungsöffnung 3 ansetzt.
Wenigstens eine axiale Durchgangsöffnung 5 im Kopfteil 1 des Grundkörpers 2 verbindet den Innenraum (Flutraum) 10 des Grundkörpers 2 mit der umgebenden Flüssigkeit im Bereich des Druckluftzuführungsrohres 7. Dadurch kann ein Flüssigkeitsaustausch im Innenraum 10 stattfinden. Ohne eine Durchgangsöffnung dieser Art wäre der Innenraum des Grundkörpers ein Flüssigkeitstotraum mit verfahrenstechnischen Nachteilen.

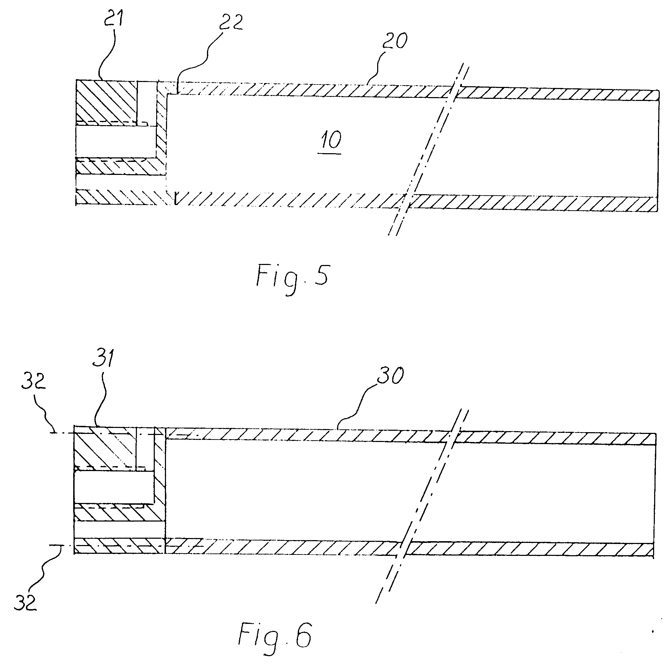

Die in der Fig. 1 dargestellte perforierte Membran 8 ist durch Spannklemmen 9 auf dem Grundkörper 2 bzw. auf dessen Verbindungselement 1 befestigt und im Bereich 11 über den Druckluftdurchtrittsöffnungen 4 nicht perforiert.
Die einströmende Luft bildet unter der elastischen, perforierten Membran 8 einen Blähraum, von dem sie durch die Perforation feinperlig in die Flüssigkeit gelangt. Während gemäß Fig. 1 bis 4 der Grundkörper und das Verbindungselement einstückig aufgeführt sind, zeigt die Fig. 5 eine zweiteilige Ausführung. Hierbei ist an einem handelsüblichen Rohrabschnitt 20 ein Verbindungselement 21 durch Spiegelschweißung verbunden. Die Schweißnaht ist mit 22 angedeutet.

Bei hinreichender Wandstärke eines Grundkörpers 30 kann ein Verbindungselement 31 stirnseitig mit Hilfe von Befestigungsschrauben 32, die gleichmäßig über den Umfang des Verbindungselements verteilt angeordnet sind, verbunden werden.

## Patentansprüche

1. Belüftungsvorrichtung zur Injektion von Druckluft in eine Flüssigkeit, insbesondere Abwasser, mit einem rohrförmigen Grundkörper und einer diesen umgebenden elastischen, perforierten Membran, durch deren Perforation bei der Beaufschlagung über ein oder mehrere radiale Öffnungen im Grundkörper die Druckluft feinperlig in die Flüssigkeit verteilt wird und im nicht beaufschlagten Zustand den Grundkörper eng umschließt sowie mit einem stirnseitigen Verbindungselement, welches den Grundkörper mit einem Druckluftzuführungsrohr verbindet und trägt, dadurch gekennzeichnet, daß das Verbindungselement (1, 21, 31) als zylindrischer Körper ausgebildet und mit einer zentralen, ein Innengewinde aufweisenden Luftzuführungsöffnung (3) versehen ist, die durch wenigstens eine radiale Öffnung (4) mit dem Raum zwischen dem Außenmantel des rohrförmigen Grundkörpers (2, 20, 30) und der Membran (8) verbunden ist, und daß das Verbindungselement wenigstens eine axial gerichtete Durchgangsöffnung (5) zur Schaffung einer zweiseitigen Verbindung des Grundkörperinnenraums (10) mit der umgebenden Flüssigkeit aufweist.

2. Belüftungsvorrichtung nach Anspruch 1, dadurch gekennzeichnet, daß das Verbindungselement (1) und der Grundkörper (2) einstückig ausgebildet sind.

3. Belüftungsvorrichtung nach Anspruch 1, dadurch gekennzeichnet, daß das Verbindungselement (21) mit einer Stirnseite des Grundkörpers (20) verschweißt ist.

4. Belüftungsvorrichtung nach Anspruch 1 oder 3, dadurch gekennzeichnet, daß der Grundkörper (20, 30) aus einem Abschnitt eines handelsüblichen Rohres besteht.

5. Belüftungsvorrichtung nach Anspruch 1 oder 2, dadurch gekennzeichnet, daß der Grundkörper (2) mit dem Verbindungselement (1) ein Spritzgießteil bildet.

6. Belüftungsvorrichtung nach Anspruch 1 oder 3, dadurch gekennzeichnet, daß das Verbindungselement (1, 21, 31) durch Spritzgießen hergestellt ist.

7. Belüftungsvorrichtung nach einem der Ansprüche 1,3,4,6, dadurch gekennzeichnet, daß das Verbindungselement (21) mit dem Grundkörper (20) durch Spiegelschweißung verbunden ist.

8. Belüftungsvorrichtung nach einem der Ansprüche 1 bis 7, dadurch gekennzeichnet, daß von der zentralen Luftzuführungsöffnung (3) vier radiale Öffnungen (4) ausgehen, zwischen denen sich vier axiale Durchgangsöffnungen (5) erstrecken.

9. Belüftungsvorrichtung nach einem der Ansprüche 1 bis 8, dadurch gekennzeichnet, daß die den Grundkörper umhüllende Membran (8) sich bis über den Mantel des Verbindungselements erstreckt und im Bereich der radialen Öffnungen (4) unperforiert ist.

10. Belüftungsvorrichtung nach einem der Ansprüche 1 bis 9, dadurch gekennzeichnet, daß die unperforierten Zonen der Membran in axialer Richtung hintereinander angeordnet sind.

## Claims

1. Aerator for injecting compressed air into a liquid, more particularly waste water, having a tubular base unit enclosed by an elastic perforated diaphragm, by means of the perforation of which the compressed air is distributed into the liquid in fine bubbles through one or more radial openings in the base unit when pressure is applied to said diaphragm, and which tightly surrounds the base unit when it is not under pressure, and also having at one end a connecting element which connects the base unit to an air supply pipe and supports same,
characterised in that the connecting element (1, 21, 31) is a cylindrical body provided with an internally threaded central air supply port (3) which is connected by at least one radial opening (4) to the compartment between the outer casing of the tubular base unit (2, 20, 30) and the diaphragm (8), and in that the connecting element incorporates at least one axially directed through-hole (5) to produce two-sided communication between the base unit interior (10) and the surrounding liquid.

2. Aerator according to claim 1, characterised in that the connecting element (1) and the base unit (2) are constructed in one piece.

3. Aerator according to claim 1, characterised in that the connecting element (21) is welded to one end face of the base unit (20).

4. Aerator according to claim 1 or 3, characterised in that the base unit (20, 30) consists of a section of a commercial pipe.

5. Aerator according to claim 1 or 2, characterised in that the base unit (2) forms an injection-moulded part with the connecting element (1).

6. Aerator according to claim 1 or 3, characterised in that the connecting element (1, 21, 31) is manufactured by injection moulding.

7. Aerator according to any one of claims 1, 3, 4 and 6, characterised in that the connecting element (21) is flush-welded to the base unit (20).

8. Aerator according to any one of claims 1 to 7, characterised in that from the central air supply port (3) run four radial openings (4) between which extend four axial through-holes (5).

9. Aerator according to any one of claims 1 to 8, characterised in that the diaphragm (8) enveloping the base unit extends past the casing of the connecting element and is unperforated in the region of the radial openings (4).

10. Aerator according to any one of claims 1 to 9, characterised in that the unperforated zones of the diaphragm are arranged one behind the other in an axial direction.

## Revendications

1. Dispositif d'aération pour l'injection d'air comprimé dans un liquide, notamment des eaux usées, avec un corps de base tubulaire et une membrane perforée élastique entourant celui-ci, à travers la perforation de laquelle, dans le cas d'une sollicitation, l'air comprimé est réparti finement perlé dans le liquide par une ou plusieurs ouvertures radiales dans le corps de base et, dans l'état non sollicité, entoure étroitement le corps de base,ainsi qu'avec un élément de liaison côté frontal qui relie le corps de base avec un tube d'amenée d'air comprimé et le supporte, caractérisé en ce que l'élément de liaison (1, 21, 31) est réalisé sous forme de corps cylindrique et est pourvu d'une ouverture d'amenée d'air centrale (3) présentant un filetage intérieur qui est relié par au moins une ouverture radiale (4) à l'espace entre l'enveloppe externe du corps de base tubulaire (2, 20, 30) et la membrane (8), et en ce que l'élément de liaison présente au moins une ouverture de passage (5) orientée axialement pour créer une liaison des deux côtés de l'espace interne du corps de base (10) avec le liquide entourant.

2. Dispositif d'aération selon la revendication 1, caractérisé en ce que l'élément de liaison (1) et le corps de base (2) sont réalisés en une pièce.

3. Dispositif d'aération selon la revendication 1, caractérisé en ce que l'élément de liaison (21) est soudé sur un côté frontal du corps de base (20).

4. Dispositif d'aération selon la revendication 1 ou 3, caractérisé en ce que le corps de base (20, 30) est constitué d'un tronçon d'un tube usuel dans le commerce.

5. Dispositif d'aération selon la revendication 1 ou 2, caractérisé en ce que le corps de base (2) constitue avec l'élément de liaison (1) une pièce moulée par injection.

6. Dispositif d'aération selon la revendication 1 ou 3, caractérisé en ce que l'élément de liaison (1,21,31) est réalisé par moulage par injection.

7. Dispositif d'aération selon l'une des revendications 1, 3, 4, 6 caractérisé en ce que l'élément de liaison (21) est relié au corps de base (20) par soudage en bout à l'aide de réflecteurs.

8. Dispositif d'aération selon l'une des revendications 1 à 7, caractérisé en ce que quatre ouvertures radiales (4) partent de l'ouverture d'amenée d'air centrale (3) entre lesquelles s'étendent quatre ouvertures de passage axiales (5).

9. Dispositif d'aération selon l'une des revendications 1 à 8, caractérisé en ce que la membrane (8) entourant le corps de base s'étend au-delà de l'enveloppe de l'élément de liaison et n'est pas perforée au voisinage des ouvertures radiales (4).

10. Dispositif d'aération selon !'une des revendications 1 à 9, caractérisé en ce que les zones non perforées de la membrane sont disposées les unes derrière les autres dans la direction axiale.
